(19) Europäisches Patentamt
European Patent Office
Office européen des brevets

(11) **EP 3 052 826 B1**

(12) **EUROPÄISCHE PATENTSCHRIFT**

(45) Veröffentlichungstag und Bekanntmachung des Hinweises auf die Patenterteilung:
**16.08.2017 Patentblatt 2017/33**

(51) Int Cl.:
*F16D 13/50* *(2006.01)*  *F16D 28/00* *(2006.01)*
*F16D 13/08* *(2006.01)*

(21) Anmeldenummer: **14789987.6**

(22) Anmeldetag: **18.09.2014**

(86) Internationale Anmeldenummer:
**PCT/DE2014/200480**

(87) Internationale Veröffentlichungsnummer:
**WO 2015/048961 (09.04.2015 Gazette 2015/14)**

(54) **BAUGRUPPE MIT REIBEINRICHTUNG**

ASSEMBLY WITH FRICTION ARRANGEMENT

ENSEMBLE COMPRENANT UN SYSTÈME DE FROTTEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.10.2013 DE 102013219862**

(43) Veröffentlichungstag der Anmeldung:
**10.08.2016 Patentblatt 2016/32**

(60) Teilanmeldung:
**17166199.4**

(73) Patentinhaber: **Schaeffler Technologies AG & Co. KG**
**91074 Herzogenaurach (DE)**

(72) Erfinder:
• **SCHUMANN, Lars**
**77815 Bühl (DE)**
• **MÁN, Lászlo**
**77833 Ottersweier-Unzhurst (DE)**
• **GREB, Peter**
**77833 Ottersweier (DE)**

(56) Entgegenhaltungen:
**EP-A1- 0 724 934      EP-A1- 2 280 182**
**WO-A1-2011/015497  WO-A1-2013/112048**
**US-A- 2 510 653      US-A- 5 287 949**

**Beschreibung**

Die Erfindung betrifft eine Baugruppe mit einer Reibeinrichtung mit wenigstens zwei relativ zueinander drehbaren Bauteilen, insbesondere zum Einsatz in einem Getriebe und/oder einem Aktor.

Aktoren werden beispielsweise zur Betätigung einer Kupplung eines Fahrzeuges eingesetzt und können die Drehbewegung eines Bauteiles in eine Axialbewegung eines weiteren Bauteiles umwandeln. Siehe EP0724934, US2510653, US5287949, WO2011/015497, EP2280182 und WO2013/112048 als Stand der Technik. Aus der Druckschrift DE 10 2012 209883 A1 ist ein Hebelsystem zur Betätigung einer Drehmomentübertragungseinrichtung, wie einer Kupplung im Antriebsstrang eines Kraftfahrzeuges, mit einem Hebel, der an einer Lagerstelle um ein Gelenk drehbar gelagert ist und der eine parallel zur Drehachse der Drehmomentübertragungseinrichtung verlagerbare Krafteinleitungsstelle aufweist, die in Wirkverbindung mit einem Betätigungsaktor ist. Der Aktor selbst kann dabei jede Art von Linearaktor sein, z. B. PWG-Aktor (PWG = Planetenwälzgewindespindeltrieb), hydraulischer Nehmerzylinder, etc..

Planetenwälzgewindespindeltriebe (PWG) sind aus einer Spindel, einer Spindelmutter und zwischen diesen über den Umfang angeordneten, in einem Planetenträger aufgenommenen Planetenwälzkörpern gebildet. Hierbei weisen die Spindel, Spindelmutter und Planetenwälzkörper Profilierungen auf, um eine Drehbewegung zwischen Spindel und Spindelmutter zu übertragen, wobei eine der Komponenten - Spindel oder Spindelmutter - drehangetrieben und die andere Komponente bei drehfester Anordnung längs der Längsachse der Spindel um einen der eingestellten Übersetzung entsprechenden Axialweg verlagert wird. Hierbei weisen die Planetenwälzkörper zwei unterschiedliche Profilabschnitte auf, die einerseits mit der Spindel und andererseits mit der Spindelmutter kämmen, wobei die einen Profilabschnitte auf dem Planetenwälzkörper rillenförmig und die anderen Profilabschnitte auf dem Planetenwälzkörper im Regelfall rillenförmig sind und je nach Ausführungsform ein komplementärer Gewindeabschnitt auf der Spindel oder der Spindelmutter und entsprechend der Rillenabschnitt auf der anderen Komponente angeordnet ist. Hierdurch werden gegenüber einer direkten Aufnahme der Spindel auf der Spindelmutter Übersetzungen erzielt, mit denen pro Spindeldrehung bei weniger Vorschub eine höhere Kraft ermöglicht ist.

Aus der EP 320 621 A1 ist beispielsweise ein PWG bekannt, bei dem die Spindel ein Gewinde und die Spindelmutter Rillen aufweist, auf denen jeweils Planetenwälzkörper mittels entsprechend komplementär ausgebildeter Profilabschnitte abwälzen. Hierbei wird die axial fest gelagerte und beispielsweise von einem Elektromotor drehangetriebene Spindel gegenüber der drehfest angeordneten Spindelmutter verdreht, so dass die Spindelmutter zwangsweise und durch die reibschlüssige Abwälzung der Planetenkörper in den Rillen der Spindelmutter axial verlagert wird. Hierbei ergibt sich über den Axialweg der Spindelmutter eine zu der Drehzahl der Spindel proportionale Bewegung. Hierzu dreht entsprechend Planetengetrieben der Planetenträger mit den Planetenrollen mit halber Drehzahl oder einem anderen Verhältnis, je nach Auslegung der Durchmesser, der drehenden Komponente, nämlich Spindel oder Spindelmutter.

Die DE 10 2010 047 800 A1 zeigt eine Anwendung eines Planetenwälzgetriebes, bei dem ein als Kolben eines Geberzylinders ausgebildetes Aktorteil eines Hydrostataktors axial fest mit der drehfest und axial verlagerbar angeordneten Spindel gekoppelt ist, wobei die axial feste Spindelmutter von einem Elektromotor drehangetrieben wird, so dass bei einer Verdrehung der Spindelmutter Spindel und Spindelmutter gegeneinander entlang des Axialwegs verlagert werden. Da das den Kolben aufnehmende und mit diesem einen Druckraum bildende Zylindergehäuse fest angeordnet ist und die Spindelmutter sich an diesem axial abstützt, baut der Kolben abhängig vom Drehantrieb der Spindelmutter einen Druck beispielsweise zur Betätigung von Kraftfahrzeugkomponenten wie Bremsen, Reibungskupplung und dergleichen auf. Hierbei ist insbesondere bei Reibungskupplungen erwünscht, ein Lüftspiel mit geringer Lastanforderung mittels einer hohen Steigung schnell zu überbrücken und im Wirkbereich der Reibungskupplung mittels einer kleinen Steigung hohe Lasten mit einem Elektromotor mit geringer Leistung aufbringen zu können.

Bei beispielsweise mittels eines Elektromotors angetriebenen wirkungsgradoptimierten Spindeltrieben (bspw. PWG) insbesondere in Aktoren, wie hydrostatischen Kupplungsaktoren (Hydrostatic Clutch Actuator-abgekürzt HCA), die gegen eine Last, beispielsweise eine Kupplungskennlinie arbeiten besteht ein Problem darin, dass bei einem erforderlichen Halten einer Position ein Haltestrom und somit ein Haltemoment im E-Motor erforderlich ist, da der Spindeltrieb (z.B. bei einem PWG) nicht selbsthemmend ist. Bei einem PWG in einem HCA mit drehfester Hohlradmutter bei angetriebenen Spindel, auf der die Axialbewegung (relativ zur Spindel) abgegriffen wird, erfolgt bei einer idealen Abrollbewegung (wie in einem verzahnten Planetengetriebe/kein Schlupf) eine zusätzliche Untersetzung der Spindelsteigung, diese ist durch variieren von Spindel- und/oder Planetenrollendurchmesser in Grenzen frei wählbar.

Ein entscheidender Nachteil derartiger Aktoren besteht darin, dass diese einen permanenten Haltestrom benötigen bzw. bei Stromausfall/Fehlerfall (bspw. Kabelbruch, Steckerabfall) die

Position nicht gehalten werden kann. Bei einer durch den Aktor aufgedrückten Kupplung besteht dann die große die Gefahr, dass die Kupplung ungewollt schließt.

Es ist weiterhin die Verwendung von Schlingfedern beispielsweise für Kupplungen bekannt. Die Schlingfederkupplung besteht aus einer auf eine Welle oder einen zylindrischen Körper gewickelten Schraubenfeder, die einseitig am Antrieb befestigt ist. Der Mitnahmeeffekt beruht darauf, dass sich das Mitnahmemoment mit jeder Windung aufgrund der Reibung verstärkt und summiert. Dadurch vergrößert sich aufgrund der Umschlingung zugleich die diese Reibung verursachende Kraft. In Gegenrichtung tritt nur eine geringe Reibung auf - die Feder vergrößert etwas ihren Durchmesser, wickelt sich jedoch nicht ab. Oft nutzt man ihre im Freilaufbetrieb verbleibende Reibung als Rutschkupplung (siehe Wikipedia).

Aus der Druckschrift DE 10 2007 047 394 A1 ist z.B. ein Torsionsschwingungsdämpfer bekannt, der mindestens zwei entgegen der Wirkung einer Dämpfungseinrichtung mit in Umfangsrichtung wirkenden Energiespeichern zueinander verdrehbaren Teilen aufweist, von denen das eine mit einer Antriebsmaschine und das andere mit einer anzutreibenden Welle verbindbar ist, wobei zwischen den beiden Teilen zusätzlich ein mit der Dämpfungseinrichtung in Reihe geschalteter Drehmomentbegrenzer vorgesehen ist, der zumindest in eine der zwischen den beiden Teilen möglichen Relativverdrehrichtungen wirksam ist und mindestens eine Schlingenfederkupplung umfasst, die bei Erreichen eines vorbestimmten Verdrehwinkels zwischen den beiden Teilen als Freilauf wirkt und mindestens ein Schlingenfederelement umfasst. Diese Lösung zeichnet sich dadurch aus, dass mindestens ein Ende des Schlingenfederelements drehfest mit einem Ringelement verbunden ist, das Abstützbereiche für die in Umfangsrichtung wirkenden Energiespeicher und/oder Ansteuerbereiche für die Freilaufwirkung aufweist.

Die Aufgabe der vorliegenden Erfindung besteht darin, eine Baugruppe mit einer Reibeinrichtung mit wenigstens zwei relativ zueinander drehbaren Bauteilen zu entwickeln, die insbesondere zum Einsatz in einem Getriebe und/oder einem Aktor vorgesehen ist und mit welcher die Reibung und somit der Wirkungsgrad zwischen den relativ zueinander drehbaren Bauteilen veränderbar ist um somit beispielsweise bei dem Einsatz in einem Aktor zur Betätigung einer Kupplung ein ungewolltes schließen der Kupplung bei Ausfall des Antriebes des Aktors zu verhindern oder um den Haltestrom zu verringern oder auszuschließen, ohne den Wirkungsgrad eines Spindeltriebs (gegen die Last) zum Beispiel bei Einsatz eines Aktors mit PWG maßgeblich zu reduzieren.

Diese Aufgabe wird durch die kennzeichnenden Merkmale des ersten Patentanspruchs gelöst.

Vorteilhafte Ausgestaltungen ergeben sich aus den Unteransprüchen.

Die Baugruppe mit Reibeinrichtung weist wenigstens zwei relativ zueinander drehbare Bauteile auf und dient insbesondere beim Einsatz in Getriebe und/oder einem Aktor beispielsweise zur Betätigung einer Kupplung eines Fahrzeuges, wobei erfindungsgemäß zwischen den relativ zueinander drehbaren Bauteilen eine bei einer Relativdrehung der Bauteile den Wirkungsgrad/die Reibung beeinflussende Schraubenfeder, angeordnet ist. Durch diese Reibeinrichtung in der Art einer Schraubenfeder, die zumindest bereichsweise eine Schlingfeder bildet, kann drehrichtungsabhängig die Reibung zwischen den Bauteilen bei treibendem Aktor gegen eine Last nur geringfügig bzw. bei treibender Last deutlich erhöht werden, um somit wirkungsgradoptimierte/nicht selbsthemmende Spindeltriebe im Fehlerfall (Stromausfall) zu halten. Ein weiterer Vorteil besteht darin, dass ein Haltestrom durch das Reibelement reduziert werden kann oder nicht mehr erforderlich ist.

Die Schraubenfeder, die zumindest bereichsweise als Schlingfeder ausgestaltet ist, ist vorzugsweise als eine einfache Schlingfeder oder eine Doppelschlingfeder oder eine Schling-Torsionsfeder ausgebildet und mit einem ersten Bauteil und mit einem zum ersten Bauteil drehbar oder drehbar und axial verschiebbar angeordneten zweiten Bauteil wirkverbunden.

Dabei kann das erste Bauteil radial innerhalb des zweiten Bauteiles angeordnet sein und die Schraubenfeder in Form von Schlingfeder oder Doppelschlingfeder oder Schling-Torsionsfeder zwischen dem ersten und dem zweiten Bauteil sitzen und mit einem ersten Ende drehfest oder reibschlüssig mit dem ersten Bauteil und mit einem zweiten Ende reibschlüssig mit dem zweiten Bauteil verbunden sein.

Die Schraubenfeder in Form einer Schling-Torsionsfeder weist insbesondere folgende Merkmale auf:

- einen als Schlingfeder (Eytelwein-Formel) wirkenden ersten Bereich mit dem ersten Ende, wobei in dem Bereich A eine Reibung oder eine konstante oder variable Vorspannung zur Erzielung einer Reibung erzeugbar ist,
- einen als Torsionsfeder wirkenden zweiten Bereich B1 mit dem zweiten Ende,
- einen Übergangsbereich C, der den Bereich A und B1 mit einander verbindet.

Die als Doppelschlingfeder ausgebildete Schraubenfeder ist insbesondere mit folgenden Merkmalen ausgestattet:

- einen als Schlingfeder (Eytelwein-Formel) wirkenden ersten Bereich A mit einem stumpfen ersten Ende, wobei in dem Bereich A eine Reibung oder eine Vorspannung/Interferenz a1 zu dem zweiten Bauteil in Form einer Nabe/Hohlwelle/Bohrung zur Erzielung einer Reibung erzeugbar ist,
- einen als Schlingfeder wirkenden zweiten Bereich B2 mit einem stumpfen zweiten Ende, mit Vorspannung/Interferenz a2 zu dem zweiten Bauteil in Form einer Welle
- einen Übergangsbereich C, der die Bereiche A und B2 mit einander verbindet.

Bei Einsatz der Baugruppe mit Reibeinrichtung in einem Aktor weist dieser dabei ein durch einen Antrieb betätigbares Getriebe auf, welches bevorzugt eine Drehbewegung in eine Axialbewegung umwandelt, beispielsweise ein PWG oder ein Getriebe anderer Bauart derart, dass eine drehrichtungsabhängige Reibung durch das zwischen dem ersten Bauteil und dem zweiten Bauteil bei treibendem Aktor gegen eine Last geringfügig bzw. bei treibender Last deutlich erhöht wird um ein nicht selbsthemmendes Getriebe (z.B. Planetenwälzgewindespindeltrieb = PWG) im Fehlerfall/Ausfall des Antriebs zu halten oder um einen Haltestrom zu reduzieren oder zu vermeiden.

Die Schraubenfeder in Form einer Schlingfeder oder doppelten Schlingfeder oder die Schling-Torsionsfeder ist dabei zwischen einem rotativen Element eines PWG oder eines anderen Getriebes und einem gehäusefesten Teil des Aktors oder zwischen zwei relativ zueinander mit unterschiedlichen Drehzahlen drehbaren Elementen des PWG oder eines anderen Getriebes angeordnet ist.

Beispielsweise kann die Schlingfeder oder die doppelte Schlingfeder oder die Schling-Torsionsfeder zwischen einer durch den Antrieb rotatorisch antreibbaren Spindel des PWGs = erstes Bauteil und einem gestellfest/gehäusefest angeordneten Bauteil (Federtopf) = zweites Bauteil

oder

zwischen einer durch den Antrieb rotatorisch antreibbaren Spindel = erstes Bauteil des PWGs und einem drehfest/gestellfest an einem Gehäuse des PWG befestigtem Federtopf = zweites Bauteil

angeordnet sein

oder

innerhalb des Gehäuses des PWG zwischen zwei relativ zueinander drehbaren Bauteilen integriert sein.

Beispielsweise kann die als Schraubenfeder ausgebildete Reibeinrichtung auch zwischen einem Außendurchmesser eines mit den Planeten des PWG kämmenden Hohlrades = erstes Bauteil/Welle und einem Innendurchmesser einer das PWG im Bereich des Hohlrades ummantelnden Hülse = zweites Bauteil/Nabe angeordnet sein.

Die Bereiche der Schlingfeder/doppelten Schlingfeder/Schling-Torsionsfeder sind bevorzugt aus einem Band gewickelt und somit im Übergangsbereich C mit einander verbunden, wobei das Band im Übergangsbereich C verdrillt sein kann, so dass der Querschnitt des Bandes in Bereich A eine erste Orientierung und im Bereich B1/B2 eine dazu gedrehte Orientierung aufweist.

Die Erfindung wird nachfolgend anhand von Ausführungsbeispielen und zugehörigen Zeichnungen näher erläutert.

Es zeigen:

Die Figuren 1 bis 6 eine erste Ausführung, bei welcher die Schraubenfeder zwischen einem rotierenden ersten Element in Form einer Gewindespindel und einem gehäusefesten zweiten Element angeordnet ist und dabei

Figur 1     die dreidimensionale Darstellung einer Schraubenfeder, die in einem ersten Bereich A als Schlingfeder und in einem zweiten Bereich B als Torsionsfeder ausgestaltet ist,

Figur 2     einen Längsschnitt gem. Figur 1,

Figur 3     eine Darstellung einer Schraubenfeder, die im Bereich A als Schlingfeder, im Bereich B als Torsionsfeder wirkt und in einem Bereich C im Querschnitt gedreht/verdrillt wird,

Figur 4     einen Längsschnitt gem. Figur 3,

Figur 5     die dreidimensionale Darstellung einer Gewindespindel, die in einem Gehäuse gelagert ist,

Figur 6     den Längsschnitt gemäß Figur 3 im Bereich des Gehäuses,

Figur 7     den am Gehäuse befestigten Federtopf, aus Richtung der Stirnseite und

Figur 8     den Federtopf aus Richtung des Flansches

Figur 9     einen Längsschnitt eines Aktors mit PWG und Schraubenfeder als Schling-Torsionsfederfeder zwischen Gewindespindel und Federtopf, der drehfest am Lagerträgergehäuse der Spindellagerung befestigt ist,

Figur 10     einen Längsschnitt eines Aktors mit PWG und Schraubenfeder als Schling-Torsionsfederfeder, die zwischen Gewindespindel und Federtopf, der drehfest am PWG-Gehäuse befestigt ist,

die Figuren 11 bis 30 Ausführungen, bei welcher die Schraubenfeder in der Art einer Doppelschlingfeder mit zwei stumpfen Enden oder in der Art einer Schling-Torsionsfeder ausgeführt und innerhalb des PWG-Gehäuses angeordnet ist und dabei im Einzelnen

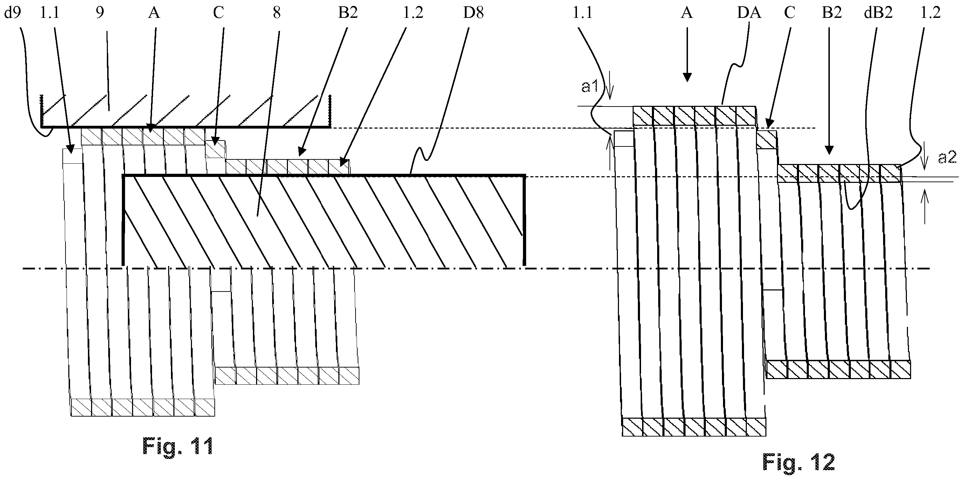

Figur 11     die Prinzipdarstellung einer Variante einer Doppelschlingfeder in Bezug eine schematisch angeordnete Welle und Nabe (eingebaut),

Figur 12     den Längsschnitt der freien Doppelschlingfeder gem. Fig. 11 mit eingezeichneter Vorspannung/Übermaß a1 zum Innendurchmesser der Nabe und Vorspannung/Übermaß a2 zum Außendurchmesser der Welle,

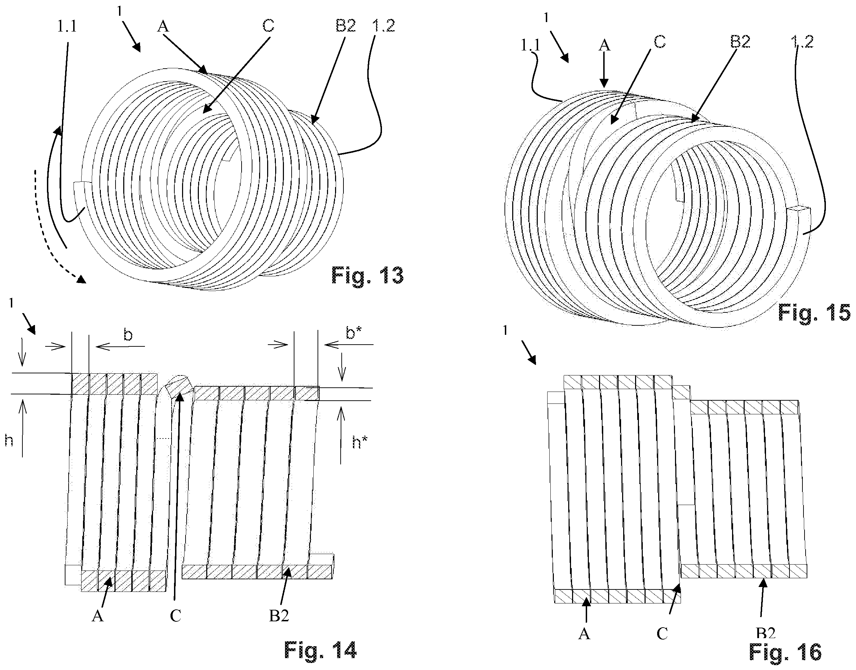

Figur 13     die dreidimensionale Darstellung einer Doppelschlingfeder mit zwei stumpfen Enden mit einem gedrillten Bereich C,

Figur 14    den Längsschnitt gem. Figur 13,

Figur 15    die dreidimensionale Darstellung einer Doppelschlingfeder mit zwei stumpfen Enden mit einem nicht gedrillten Bereich C,

Figur 16    den Längsschnitt gem. Figur 15,

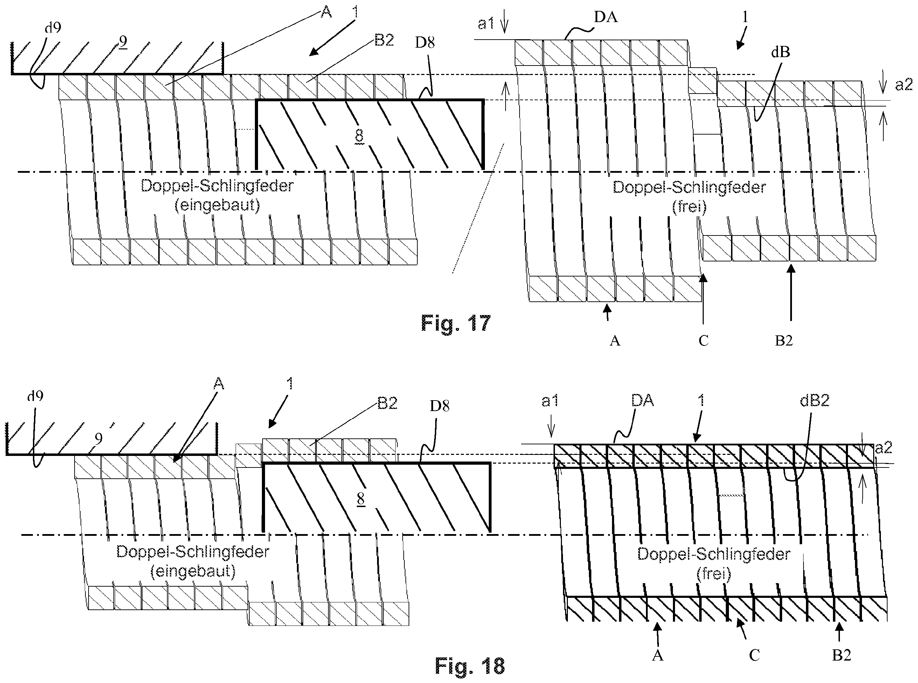

Figur 17    eine Variante der Gestaltung des Übermaßes einer Doppelschlingfeder mit zwei stumpfen Enden,

Figur 18    eine weitere Variante der Gestaltung des Übermaßes der Doppelschlingfeder mit zwei stumpfen Enden,

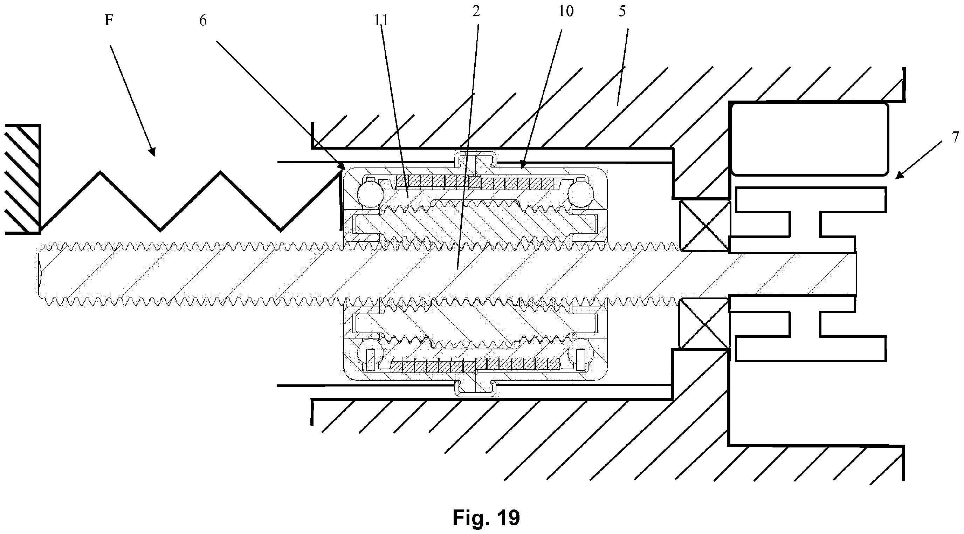

Figur 19    einen Längsschnitt eines Aktors, in dessen PWG-Gehäuse die Doppelschlingfeder integriert ist, wobei das PWG-Gehäuse verdrehfest am Lagerträgergehäuse festgelegt ist,

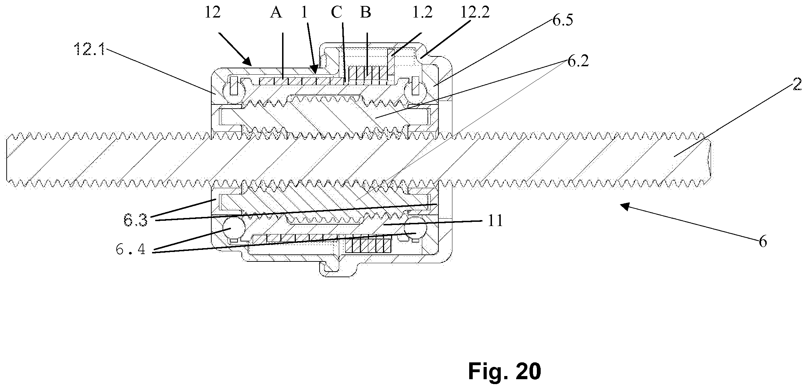

Figur 20    einen Längsschnitt eines Aktors, bei dem die zwei Bereiche aufweisende Schlingfeder zwischen dem Außendurchmesser des Hohlrades und dem Innendurchmesser einer mit dem Planetenträger an ihrem als Torsionsfeder ausgebildeten Ente (hier rechts) drehfest verbundenen zweiteiligen Hülse mit unterschiedlichen Bereichen der Innendurchmesser sitzt und endseitige Anschläge zur Hülse aufweist,

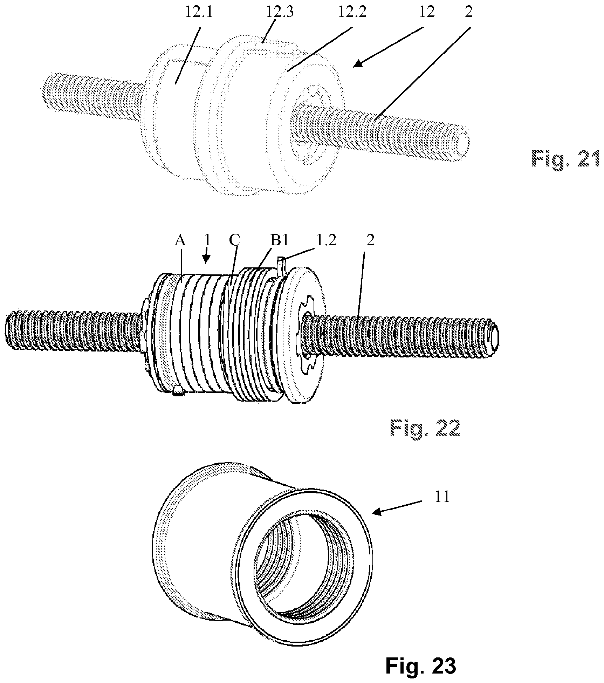

Figur 21    eine dreidimensionale Darstellung gem. Figur 20,

Figur 22    eine dreidimensionale Darstellung gem. Figur 21 ohne Hülse,

Figur 23    eine dreidimensionale Darstellung des Hohlrades,

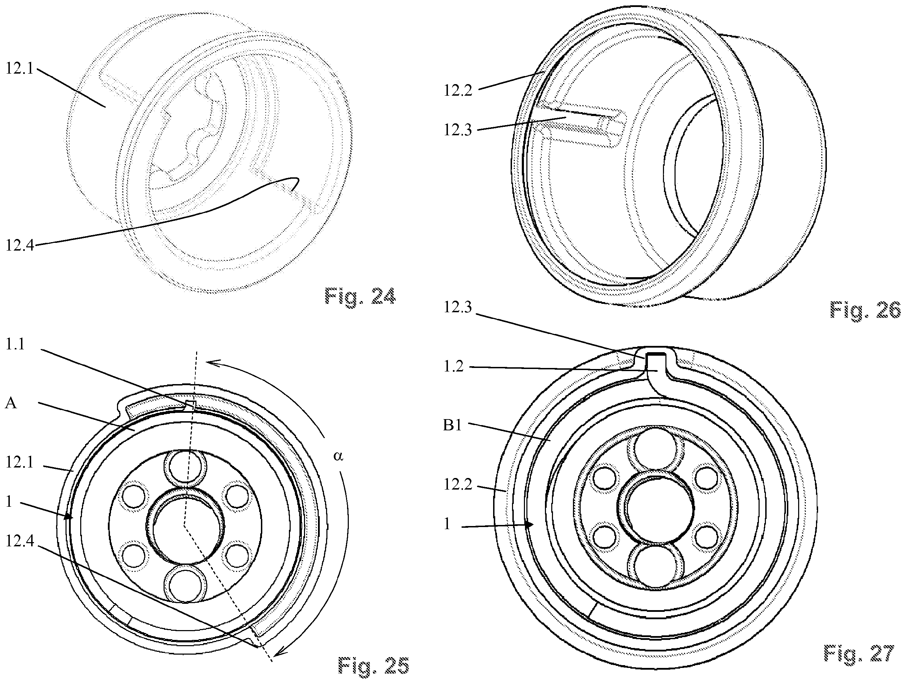

Figur 24    eine dreidimensionale Darstellung eines ersten Teiles der Hülse,

Figur 25    eine Prinzipdarstellung des ersten Teils der Hülse mit eingehängter Schlingfeder,

Figur 26    eine dreidimensionale Darstellung eines zweiten Teiles der Hülse,

Figur 27    eine Prinzipdarstellung des zweiten Teils der Hülse mit eingehängter Schlingfeder,

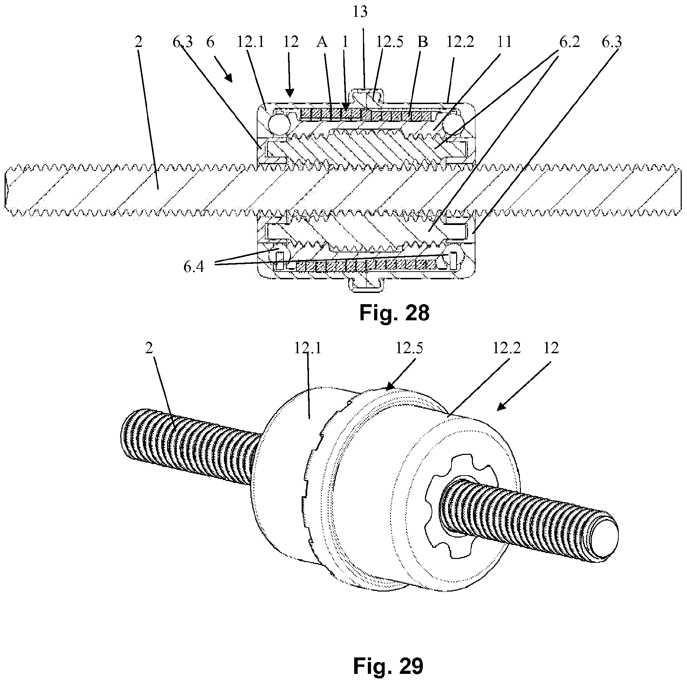

Figur 28    ein PWG, ähnlich wie in Figur 20, jedoch einer als Doppelschlingfeder wirkenden Schraubenfeder und mit zweiteiliger Hülse mit gleichem Innendurchmesser, im Längsschnitt unter,

Figur 29    die dreidimensionale Ansicht gem. Figur 28,

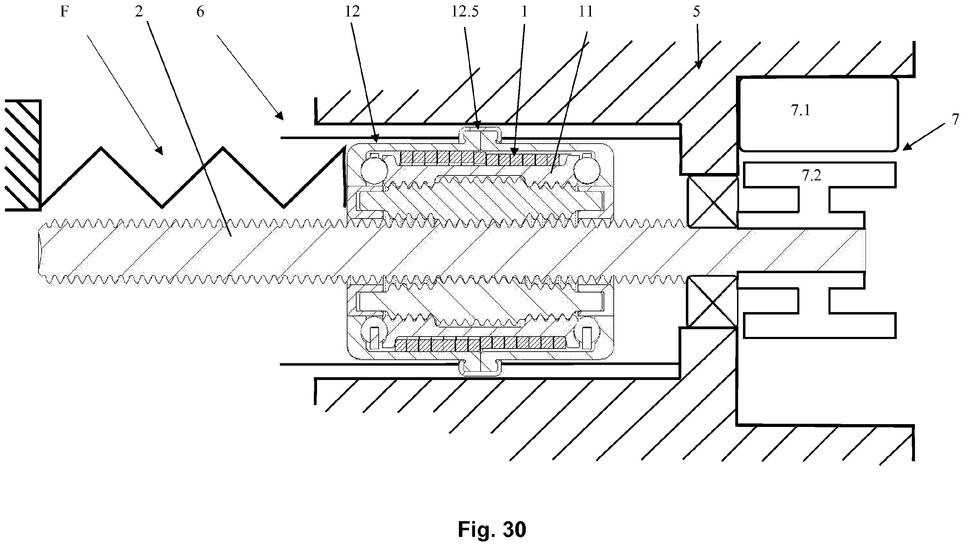

Figur 30    einen Aktor mit einem PWG gemäß Figur 28/29.

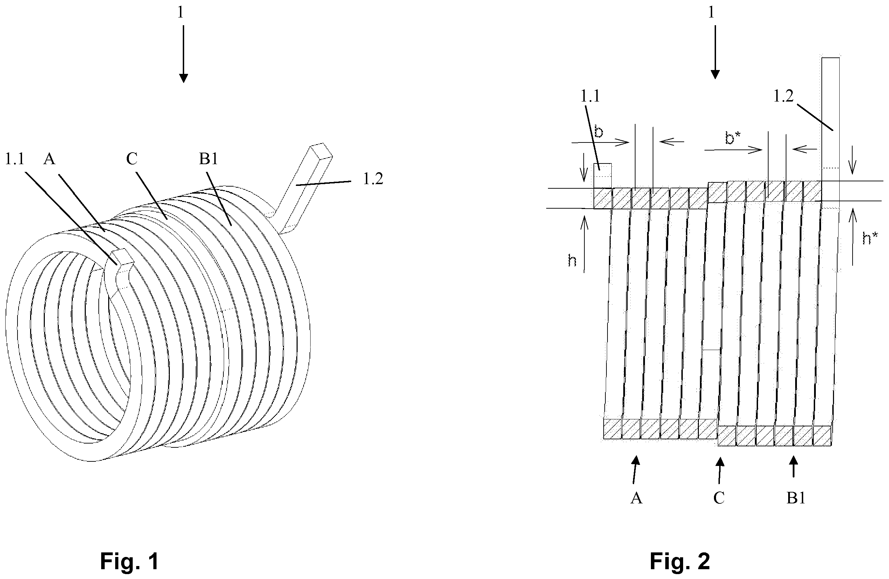

Nach den Figuren 1 und 2 weist ein als Schlingfeder (Eytelwein-Formel) wirkender erster Bereich A ein erstes Ende 1.1 auf, welches radial nach außen gebogen ist, wobei eine konst. Reibung am Ende 1.1 oder eine konstante oder variable Vorspannung über den ersten Bereich A zu einer Nabe (einen Außendurchmesser) hergestellt wird, um Reibung zu erzeugen. Weiterhin ist ein als Torsionsfeder wirkender zweiter Bereich B1 mit einem zweiten Ende 1.2 vorhanden, welches ebenfalls radial nach außen gebogenen ist. Ein Übergangsbereich C verbindet die Bereiche A und B miteinander. Der Außendurchmesser und der Innendurchmesser der Windungen sind in den Bereichen B1 und C größer als im Bereich A.

In allen Bereichen ist die gleiche Breite b und Höhe H des Querschnittes der Windungen vorhanden.

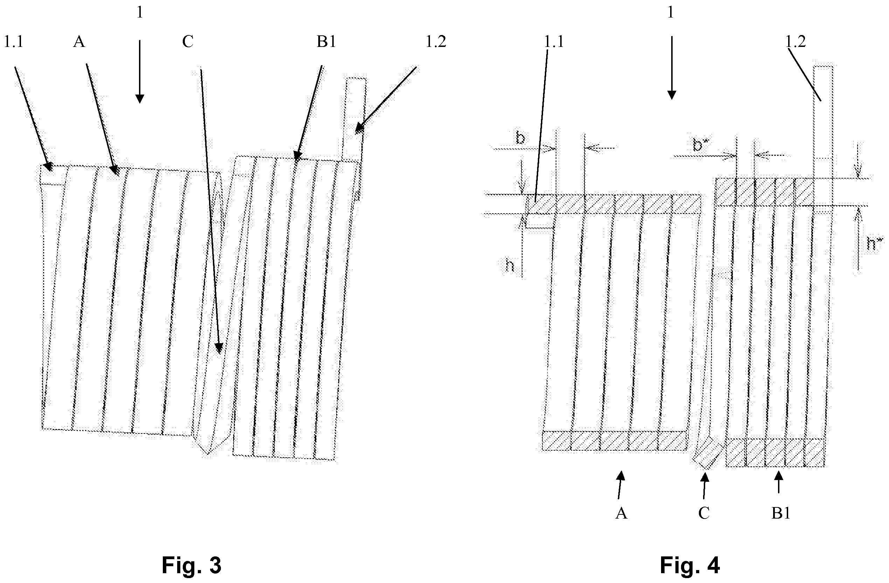

Gemäß der Figuren 3 (dreidimensionale Ansicht) und 4 (Längsschnitt) weist die Schling-Torsionsfeder 1 ebenfalls Bereiche A, B1, C auf, wobei jedoch der Bereich C um 90° verdrillt ist. Der rechteckförmige Querschnitt der Windungen weist dadurch im ersten Bereich A eine Höhe h und eine Breite b auf, der durch das Verdrillen im Bereich C um 90° dann im zweiten Bereich B1, der als Torsionsfeder wirkt, so ausgebildet ist, dass die Höhe h\* in B der Breite b in A und die Breite b\* in B1 der Höhe h in A entspricht. Dadurch ist es möglich bei einem gleichen Querschnitt der Windungen die Wirkung des gesamten Bauteils zu verstärken. Es ist weiterhin das Ende 1.1 des ersten Bereiches A stumpf ausgeführt.

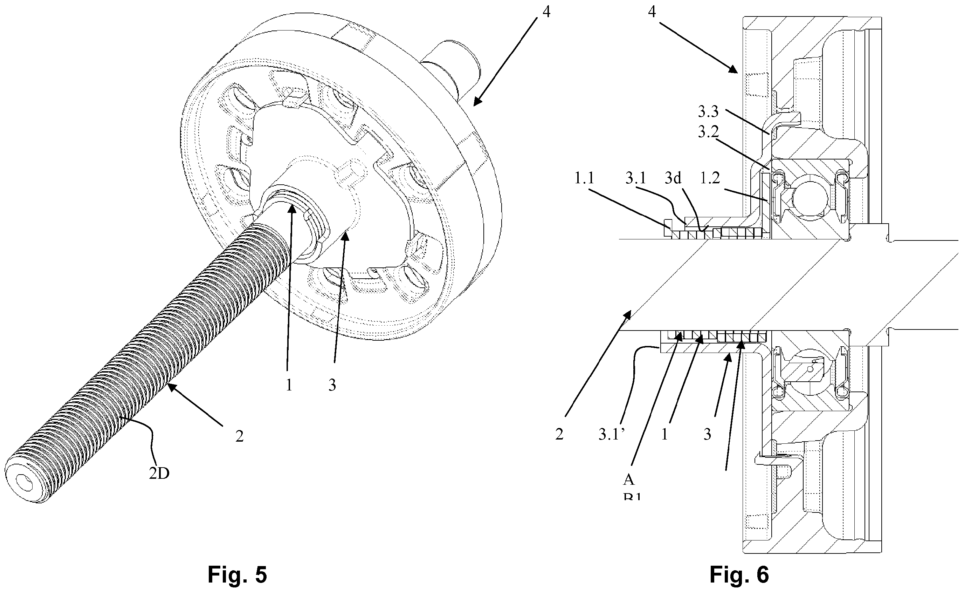

In den Figuren 5 bis 9 ist dargestellt, wie beispielsweise eine Spindel 2 eines PWG mit der als Schling-Torsionsfeder ausgebildeten Schraubenfeder 1 gem. Figur 1 und 2 kombiniert ist.

Figur 5 zeigt die dreidimensionale Darstellung einer Gewindespindel/Spindel 2 eines PWGs, die in einem, einen Federtopf 3 gehäusefest aufnehmenden, Gehäuse 4 gelagert ist und Figur 6 den Längsschnitt gemäß Figur 5 im Bereich des Gehäuses 4. Die Schraubenfeder 1, die hier in Form einer Schling-Torsionsfeder gemäß Fig. 1 und 2 ausgebildet ist, sitzt zwischen dem Außendurchmesser 2D der Gewindespindel/Spindel 2 und dem Innendurchmesser 3d des Federtopfes 3 und wirkt mit ihrem ersten Ende 1.1 mit einer darauf zuweisenden Stirnseite 3.1 des Federtopfes 3 zusammen, die im Vergleich zu der hier linken endseitigen Stirnseite 3.1' etwas zurückgesetzt ist, und sitzt mit ihrem zweiten Ende 1.2 drehfest in einer Ausnehmung 3.2 eines radial nach außen weisenden Flansches 3.3 des Federtopfes 3.

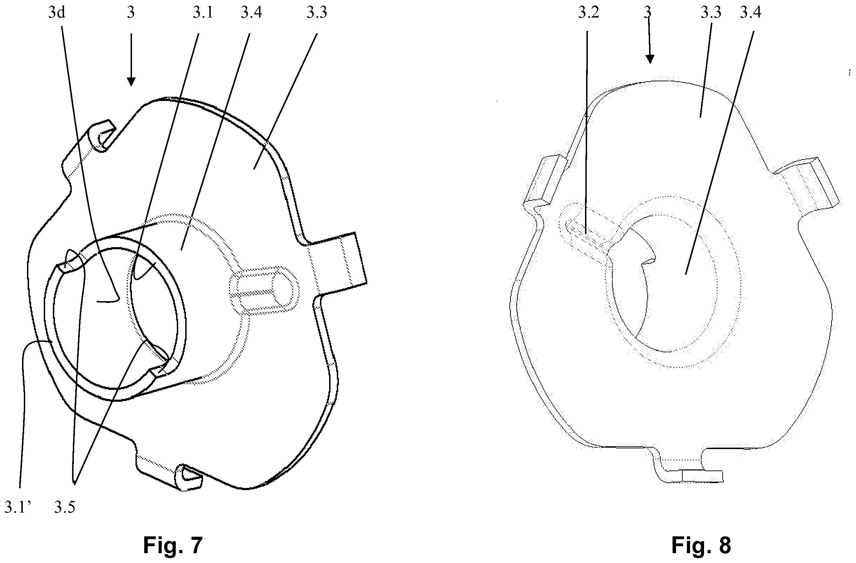

Der Federtopf 3 gemäß der Figuren 5 und 6 in dreidimensionaler Darstellung ist aus Richtung der Stirnseite 3.1 in Figur 7 und aus Richtung des Flansches 3.3 in Figur 8 dargestellt. Es ist ersichtlich, dass der Innendurchmesser 3d an einem buchsenartigen Bereich 3.4 ausgebildet ist. An diesem befindet sich auch die im Vergleich zu der endseitigen Stirnseite 3.1' zurückgesetzte Stirnseite 3.1, mit dem das hier nicht dargestellte Ende 1.1 der Schraubenfeder, welches die Schlingfeder- erster Bereich bildet, zusammenwirkt. Durch die zurückgesetzte Stirnseite 3.1 werden zwei umfangsseitig voneinander beabstandete Anschläge 3.5 für das radial nach außen abgewinkelte erste Ende 1.1 der Schlingfeder/erster Bereich A (s. Fig. 1 und 2) gebildet.

Die Ausnehmung 3.2 ist sickenartig in den Flansch 3.3 eingeformt. In diese ist im montierten Zustand das zweite Ende 1.2 der Torsionsfeder/zweiter Bereich B1 drehfest eingehängt.

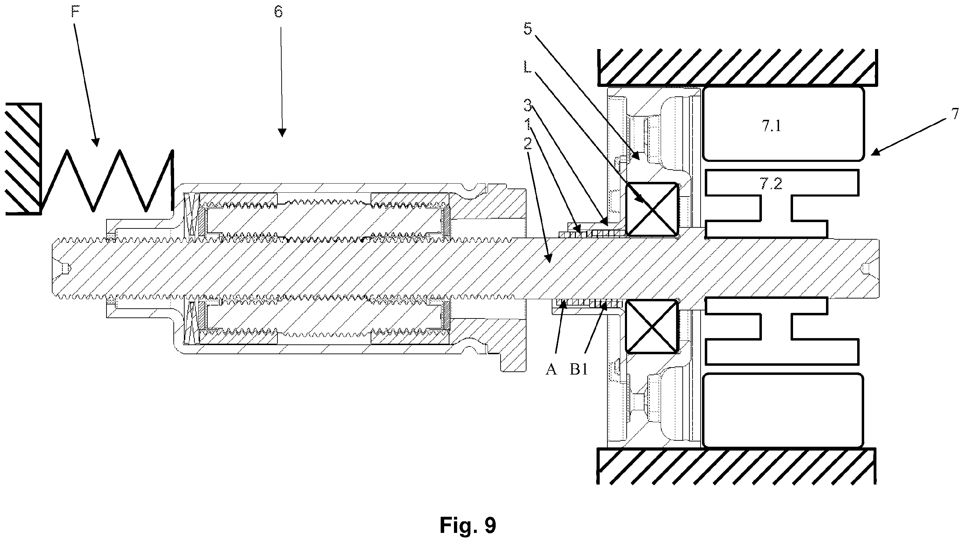

Ein Aktor unter Verwendung einer Schraubenfeder 1 gemäß der Figuren 1 und 2 bzw. der bereits in den Figuren 5 und 6 dargestellten Anordnung des Schraubenfeder 1 wird in Figur 9 gezeigt.

Es wird ein wirkungsgradoptimierter Spindeltrieb, hier in Form eines PWG 6, eingesetzt, welcher die Gewindespindel 4 aufweist, die durch einen Elektromotor 7 angetrieben wird, der im Wesentlichen aus Stator 7.1 und dem die Spindel 4 antreibenden Rotor 7.2 gebildet wird.

Die als Schling- Torsionsfederfeder ausgebildete Schraubenfeder 1 ist hier zwischen Außendurchmesser der Gewindespindel/Spindel 2 und Innendurchmesser des Federtopfes 3, der drehfest mit dem Gehäuse 5 der Spindellagerung L verbunden ist, befestigt. Der erste als Schlingfeder ausgebildete Bereich A weist in Richtung zum PWG 6 und der zweite als Torsionsfeder ausgebildete Bereich B1 in Richtung zum Elektromotor 7. Die Schraubenfeder 1 ist axial fest angeordnet.

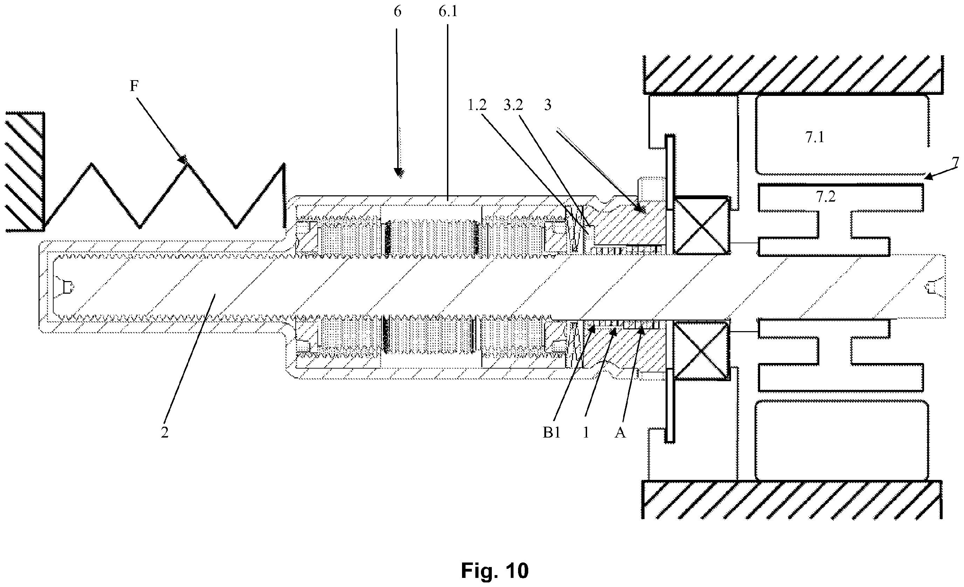

Eine ähnliche Ausbildung eines Aktors mit PWG zeigt Figur 10 - im Unterschied zu Figur 9 wird hier eine Schraubenfeder 1 in Form einer Schling-Torsionsfederfeder zwischen Spindel 2 und Federtopf 3, der einen Bestandteil des PWG bildet, wobei der Federtopf 3 drehfest am PWG-Gehäuse 6.1 befestigt ist. Der zweite als Torsionsfeder ausgebildete Bereich B1 weist in Richtung zum PWG 6 und der erste als Schlingfeder ausgebildete Bereich A in Richtung zum Gehäuse 5. Durch diese Anordnung werden die Schraubenfeder 1 und der Federtopf 3 in axialer Richtung mit dem PWG-Gehäuse 6.1 bewegt. Das zweite Ende 1.2 ist ebenfalls in einer Ausnehmung 3.2 am Federtopf 3 drehfest eingehängt.

Wird der in dem Figuren 9 und 10 dargestellte Aktor gegen die Axiallast F betrieben, wird der als Schlingfeder wirkende erste Bereich A der Schraubenfeder 1 in Öffnungsrichtung betätigt - das Reibmoment zwischen Schlingfeder (erster Bereich A) und Spindel 2 wird reduziert.

Wird der Aktor durch die Axiallast F getrieben (entgegengesetzte Drehrichtung) wird die Schlingfeder in Form des ersten Bereiches A über Reibung (am ersten Ende 1.1 zur Stirnseite 3.1 des Federtopfes 3 gem. Figur 6; bzw. im ersten Bereich A zwischen Außendurchmesser der Spindel 2 und Innendurchmesser der Schlingfeder) mitgenommen und der als Torsionsfeder ausgebildete zweite Bereich B1 tordiert. Die Durchmesseränderung zum unbelasteten Zustand muss vorgehalten werden, bis zum Momentengleichgewicht zwischen rücktreibenden Moment (aufgrund der Last) und Torsionsmoment der Schraubenfeder 1 im zweiten Bereich B1, und wird in dieser Position gehalten. Um den Aktor zu entlasten/weiter zu drehen muss der Elektromotor 7 bestromt werden. Dabei wird das erste Ende 1.1 gegen den Anschlag 3.5 (siehe Figur 7) im verdrehfesten Bauteil (Federtopf 3) gedreht. Das Reibmoment der Schlingfeder im ersten Bereich A wird dadurch begrenzt und liegt unterhalb des Motormoments des Elektromotors 7, so dass der PWG 6 durch den Elektromotor 7 auch gegen die Schlingfederreibung verstellt werden kann (aktives Öffnen).

Der Aufbau kann auch anders herum erfolgen, so dass die Feder mit dem Ende 2 mit einem rotierenden Teil (Spindel) verbunden ist und gegen ein verdrehfestes Bauteil (Federtopf) reibt.

Durch diese erfindungsgemäße Variante wird eine Reibeinrichtung zwischen einem rotierenden ersten Bauteil (hier Spindel 2 =Welle) einem stehenden zweiten Bauteil (hier Federtopf 3 = Nabe) mittels einer modifizierten Schraubenfeder 1 geschaffen, welche drehrichtungsabhängig die Reibung zwischen den Bauteilen bei treibendem Aktor gegen eine Last reduziert bzw. bei treibender Last erhöht um somit wirkungsgradoptimierte/nicht selbsthemmende Getriebe, insbesondere Spindeltriebe, im Fehlerfall (Stromausfall) zu halten.

Gemäß der Erfindung wird somit erstmalig durch die Zwischenschaltung einer Schraubenfeder, die zumindest bereichsweise als Schlingfeder ausgebildet ist, in einer Baugruppe bspw. einem PWG die Reibung und somit der Wirkungsgrad gezielt beeinflusst. Bei treibender Last Zurückfahren des PWG unter Last, d.h. ohne Rotorrotation dreht sich die Spindel nicht mit. Die Schlingfeder wird zwischen dem Drehfesten Federtopf und dem PWG eingeklemmt. Mit der einen Seite ist die Schlingfeder dabei über Form- über die andere Seite mittels Reibschluss verbunden. Durch die Reibung zieht sich die Feder zusammen und führt zur Selbsthemmung der Baugruppe. Für den Fall, dass die Störung behoben ist, bzw. im Normalfall der E-Motor aktiv bestromt wird, wird das Schlingfederende gegen einen entsprechenden Anschlag gestellt und somit das Reibmoment begrenzt. Dadurch wird die Selbsthemmung überwunden.

Neben der Verwendung in Kombination mit einem PWG ist beispielsweise auch die Anwendung in Kombination mit einem anderen Getriebe, z.B. einem Kugelgewindetrieb (KGT) möglich.

In den Figuren 11 bis 30 wird die Verwendung einer Schraubenfeder 1 in Form einer Doppelschlingfeder oder einer Schling-Torsionsfeder beschrieben, die in ein Getriebe, hier ein PWG, integriert ist.

Figur 11 zeigt die Prinzipdarstellung einer Variante einer Schraubenfeder 1 in Form einer Doppelschlingfeder in Bezug eine schematisch angeordnete Welle 8 (erstes Bauteil) und Nabe 9 (zweites Bauteil) im eingebauten Zustand und Figur 12 den Längsschnitt der freien Doppelschlingfeder gem. Fig. 11. Die Schraubenfeder 1 weist gem. Figur 11 und 12 einen ersten Bereich A mit einem stumpfen Ende 1.1 auf, wobei der erste Bereich A als Schlingfeder wirkt und dessen Außendurchmesser DA zum Innendurchmesser d9 der Nabe 9 eine in Figur 12 eingezeichnete Vorspannung (auch bezeichnet als Interferenz) bzw. ein Übermaß a1 aufweist. Der zweite Bereich B2 der Schraubenfeder1 ist ebenfalls als Schlingfeder, jedoch mit geringerem Durchmesser ausgebildet, und weist ein ebenfalls stumpfes zweites Ende 1.2 auf. Zwischen dem Außendurchmesser D8 der Welle 8 und dem Innendurchmesser dB2 des zweiten Bereiches B2 besteht eine Vorspannung / ein Übermaß a2. Zwischen dem ersten Bereich A und dem zweiten Bereich B2 erstreckt sich der Übergangsbereich C.

In Figur 13 wird die dreidimensionale Darstellung einer Schraubenfeder 1 in Form einer Doppelschlingfeder mit zwei stumpfen Enden 1.1, 1.2 mit einem ersten als Schlingfeder wirkenden Bereich A, einem zweiten als Schlingfeder wirkenden Bereich B2, der einen geringeren Außen- und Innendurchmesser als der erste Bereich A aufweist, gezeigt und in Fig. 14 der Längsschnitt davon. Der Übergangsbereich C ist um 90° gedrillt/verschränkt, wie bei der Schling-Torsionsfeder gem. Fig. 3 und 4, so dass der rechteckförmige Querschnitt der Windungen im ersten Bereich A eine Höhe h und eine Breite b aufweist, der durch das Verdrillen im Bereich C um 90° dann im als Schlingfeder wirkenden zweiten Bereich B2, so ausgebildet ist, dass die Höhe h* in B2 der Breite b in A und die Breite b* in B2 der Höhe h in A entspricht.

Eine Schraubenfeder 1, die ebenfalls als Doppelschlingfeder ausgebildet ist, jedoch mit einem nicht verdrillten Übergangsbereich C zwischen dem ersten Schlingfederbereich A und dem zweiten Schlingfederbereich B2 zeigen die Figuren 15 und 16. Das erste und zweite Ende 1.1, 1.2 ist hier ebenfalls stumpf ausgeführt und Außen- und Innendurchmesser des zweiten Bereiches B2 sind kleiner als der Außen- und Innendurchmesser des ersten Bereiches A.

Figur 17 zeigt eine erste Variante der Gestaltung des Übermaßes einer Schraubenfeder 1 als Doppelschlingfeder mit zwei stumpfen Enden, links eingebaut und rechts frei. Der erste Bereich A weist im nicht eingebauten freien Zustand einen größeren Durchmesser auf, als der zweite Bereich B2 (Bereiche A und B2 wirken als Schlingfedern), so dass diese im eingebauten Zustand (linke Darstellung) einen im Wesentlichen gleichen Durchmesser aufweisen.

In Figur 18 weist gemäß einer zweiten Variante die als Doppelschlingfeder ausgebildete Schraubenfeder im Ausgangszustand einen im Wesentlichen einheitlichen Außen- und Innendurchmesser auf, wobei im eingebauten Zustand der Außendurchmesser des ersten Bereiches A kleiner wird als der Außendurchmesser des zweiten Bereiches B2.

In beiden Varianten weist die Welle 8 einen Außendurchmesser D8 und der zweite Bereich B1 einen Innendurchmesser dB auf, so dass ein Übermaß a2 (Interferenz) zwischen diesen vorhanden ist, Zwischen dem Innendurchmesser d9 der Nabe 9 und dem Außendurchmesser des ersten Bereiches A ist ein Übermaß/eine Interferenz a1 vorhanden. Durch die unterschiedlichen Ausgangsformen der Schraubenfedern 1 im nicht eingebauten Zustand ergeben sich in Verbindung mit den Übermaßen zu Welle und Nabe unterschiedliche Einbauzustände bei den Figuren 17 und 18.

Die Variante gemäß Figur 18 ist für die Herstellbarkeit der Schraubenfeder 1 von Vorteil (konstanter Wicklungsdurchmesser). Die Varianten nach Fig. 18 bedingt, dass sich Welle 8 und Nabe 9 im Doppel-Schlingfederbereich axial nicht überschneiden dürfen. Sie können aber bezogen auf die in Figur 17 beschriebene Variante einen radialen Bauraumvorteil bringen.

Figur 19 zeigt einen Längsschnitt eines Aktors, in dessen Käfig 10 die Doppelschlingfeder (Schraubenfeder 1) integriert ist, wobei der Käfig 10 verdrehfest am Lagerträgergehäuse/ Gehäuse 5 eines wirkungsgradoptimierten Spindeltriebes, hier ein PWG 6 festgelegt ist. Die als

Doppelschlingfeder ausgebildete Schraubenfeder 1 sitzt frei zwischen dem Innendurchmesser des Käfigs 10 (= Nabe) und dem Außendurchmesser des Hohlrades 11 (= Welle) des PWG 6.

Die Schraubenfeder, welche nach den Figuren 11 bis 19 ausgebildet ist, weist zusammengefasst insbesondere folgende Merkmale auf:

- einen als erste Schlingfeder (Eytelwein-Formel) wirkenden ersten Bereich A mit einem stumpfen ersten Ende 1.1, mit vorzugsweise konstanter. Vorspannung/Interferenz a1 zu einer Nabe 9 (Hohlwelle/Bohrung),

- ein als zweite Schlingfeder (Eytelwein-Formel) wirkender zweiter Bereich B2 mit einem stumpfen Ende 1.2, mit vorzugsweise konstanter Vorspannung/Interferenz a2 zu einer Welle 8,

- beide Bereiche A und B2 sind aus einem Band gewickelt und somit im Übergangsbereich C mit einander verbunden,

- im Bereich C kann das Band um 90° verdrillt sein um die Differenzwirkung zwischen dem ersten Bereich A und dem zweiten Bereich B2 zu verstärken,

- beide Enden 1.1, 1.2 sind frei auf der Welle 8 bzw. in der Nabe 9 angeordnet - eine rotatorische Zuordnung während der Montage ist nicht nötig,

- es ist zwingend notwendig, dass eine Federbereich auf einer Welle und der andere auf einer Nabe montiert sind.

Die Doppelschlingfeder erhindert damit eine Relativbewegung zwischen zwei zueinander rotatorisch freien Teilen (Nabe / Welle). Das ist insbesondere in Aktoren nötig, die durch eine Axialkraft getrieben aber nicht selbsthemmend sind, aber im Fehlerfall (Stromausfall) die Position halten müssen.

Maßgeblich für die Funktion sind die vorzugsweise unterschiedlichen Schleppmomente in dem ersten Bereich A und dem zweiten Bereich B, die sich nach folgender Gleichung berechnen

$$M_{schlepp} = 2\,a\,I\,E\,/\,d^2$$

*a: Interferenz / Übermaß (Überdeckung von Schraubenfeder zu Welle,*

*I: Flächenträgheitsmoment,*

*E: Elastizitätsmodul,*

*d: mittlerer Windungsdurchmesser im eingebauten/gespannten Zustand*

und somit insbesondere Reibwertunabhängig sind. Darüber hinaus muss das Sperrmoment der einen Feder mind. das Schleppmoment der jeweils anderen Feder abstützen können um die ausgelegten Schleppmomente (auf dem jeweils lösend betrieben Federbereich) zu erzielen.

Die Funktionsweise ist folgende:

Wird die Nabe 9 relativ zur Welle 8 (getrieben durch einen Antriebsmotor, bevorzugt Elektromotor 7) gegen die Wicklungsrichtung der Schraubenfeder 1 verdreht, wird der erste Bereich A der Doppel-Schlingfeder radial in die Nabe 9 gedrückt und gesperrt, gleichzeitig wird der zweite Bereich B2 auf der Welle 8 geschleppt - weißt der zweite Bereich B das niedrigere Schleppmoment auf, ist dies die bevorzugte Drehrichtung um gegen die Axiallast F zu arbeiten (um beispielsweise eine Kupplung zu öffnen).

Wird die Nabe 9 relativ zur Welle 8 in Wicklungsrichtung verdreht (getrieben durch die Axiallast bei nicht rotierender Spindel 2 - s. Fig. 19), wird der zweite Bereich B2 auf der Welle 8 gesperrt und stützt das Verdrehmoment ab, der erste Bereich A der Doppel-Schlingfeder wird öffnend betrieben, kann aber ein Schleppmoment abstützen, welchen größer ist als das rücktreibende Moment der Axialkraft. Erfindungsgemäß wird eine Rückstellung insbesondere im Fehlerfall verhindert. Um den Aktor aktiv zurückzustellen, muss der Antriebsmotor gegen das Schleppmoment des Federbereichs A (unterstützt durch das rücktreibende Moment der Axiallast) arbeiten.

Die als Doppel-Schlingfeder wirkende Schraubenfeder dient somit erstmalig als Sicherungselement gegen ungewolltes Öffnen der Kupplung im Fehlerfall, denn sie wird als Reibelement verwendet. Abhängig von der Drehrichtung wird ein ausreichend großes Reibmoment in Schließrichtung und ein sehr kleines Reibmoment in Öffnungsrichtung bereit gestellt.

Hierbei wird ausgenutzt, dass eine Schlingfederkupplung in Öffnungsrichtung Windungsanzahl- und Reibwert-unabhängig ein konstantes Reibmoment M erzeugt.

Dadurch wird eine Selbsthemmung eines Planetenwälzgetriebens (PWG) unter Verwendung einer Schraubenfeder erreicht. Durch die Konstruktion als Doppelschlingfeder mit zwei unterschiedlichen Vorspannungen wird eine Drehung in einer Richtung weniger gebremst als in die andere. Die Schlingfeder kann dabei im freien Zustand unterschiedlich Weit aufgespannt sein und dann im gespannten Zustand eine gemeinsame äußere Fläche bilden oder umgekehrt.

Eine weitere Ausführungsform der Erfindung wird in Figur 20 an einem Längsschnitt eines Aktors dargestellt, bei dem die zwei Bereiche aufweisende Schraubenfeder 1 (einen als Schlingfeder ausgebildeten ersten Bereich A und einen als Torsionsfeder ausgebildeten zweiten Bereich B1) zwischen dem Außendurchmesser des Hohlrades 11 und dem Innendurchmesser einer zweiteiligen Hülse 12 angeordnet ist. Die Hülse 12 ist mit dem die Planeten 6.2 aufnehmenden Planetenträger 6.3 verbundenen, die mit der Spindel 2 kämmen, und weist unterschiedliche Bereiche der Innendurchmesser auf. Ein erster Bereich 12.1 besitzt einen kleineren Innendurchmesser, der den ersten Bereich A (Schlingfeder) und ein zweiter Bereich 12.2 einen größeren Innendurchmesser, der dem zweiten Bereich B1 (Torsionsfeder) der Schraubenfeder 1 angepasst ist. Das zweite Ende 1.2, welches an dem zweiten Bereich B1 ausgebildet ist, ist radial nach außen abgewinkelt und drehfest mit dem zweiten Bereich 20.2 der Hülse 20 gekoppelt.

Das Hohlrad 11 sitzt axial zwischen zwei Axiallagern 6.4 und wird über einen Axiallagerring 6.5 festgelegt.

Das Hohlrad 11 mit seinem Außendurchmesser bildet somit die Welle = erstes Bauteil und der Innendurchmesser der Hülse 12 die Nabe = zweites Bauteil, zwischen denen die Schraubenfeder 1, die eine Reibeinrichtung bildet, angeordnet ist.

Aus Figur 21 ist eine dreidimensionale Darstellung gem. Figur 20 ersichtlich, aus der die zweiteilige Hülse12 und die Spindel 2 hervorgehen. Die Bereiche 12.1, 12.2 sind miteinander gehäuseartig verbunden, wobei der Bereich 12.2 eine radial nach außen weisende Ausnehmung 12.3 aufweist, in welche das torsionsfederseitige zweite Ende 1.2 der Schraubenfeder drehfest eingehängt wird.

In Figur 22 wird eine dreidimensionale Darstellung gem. Figur 21 ohne Hülse 12 gezeigt, aus welcher die unterschiedlichen Durchmesserbereiche der Schraubenfeder 1 in Form des ersten Bereiches A, der als Schlingfeder ausgebildet ist und des zweiten Bereiches B1 der als Torsionsfeder ausgebildet ist, ersichtlich sind. Das zweite Ende 1.2 der Schraubenfeder 1 greift in die Ausnehmung 12.3 der Hülse 12 zu dieser drehfest ein. Zentrisch im PWG läuft die Spindel 2. Eine dreidimensionale Darstellung des Hohlrades 11 zeigt Figur 23. Auf dessen nicht bezeichnetem Außendurchmesser sitzt die Schraubenfeder 1 (hier nicht ersichtlich), in dessen Innendurchmesser wälzen die ebenfalls hier nicht dargestellten Planeten.

Eine dreidimensionale Darstellung des ersten Teiles 12.1 der Hülse 12 zeigt Figur 24 und Figur 25 eine Prinzipdarstellung des ersten Teils der Hülse 12.1 mit eingehängter Schlingfeder (erster Bereich A) in der Vorderansicht. Der erste Teil 12.1 der Hülse 12 weist ähnlich wie der Federtopf 3 in Figur 7/8 einen Anschlag 12.4 für das radial nach außen abgewinkelte erste Ende 1.1 der Schraubenfeder 1 auf. Zwischen dem Ende 1.1 der Schlingfeder und dem Anschlag 12.4 wird ein Torsionswinkel α gebildet.

Figur 26 zeigt eine dreidimensionale Darstellung eines zweiten Teiles der Hülse 12.2 mit der radial nach außen weisenden Ausnehmung 12.3. Aus Figur 27 ist anhand einer Prinzipdarstellung des zweiten Teils 12.2 der Hülse 12 ersichtlich, dass in die Ausnehmung 12.3 das radial nach außen weisende zweite Ende 1.1 des zweiten Bereiches B1, der Schraubenfeder, 1 der als Torsionsfeder wirkt, drehfest eingehängt ist.

Aus den Figuren 20, 22, 25, 27 geht hervor, dass der Übergangsbereich C der Schraubenfeder um 90° verdrillt ist, so dass die Höhe der Windungen des ersten Bereiches A der Breite der Windungen des zweiten Bereiches B2 und die Breite der Windungen des ersten Bereiches A der Höhe der Windungen des zweiten Bereiches B1 entspricht.

In dieser Variante (Fig. 20 bis 27) ist der Aktor Umfangsweg bzw. Winkel-gesteuert, da die Schraubenfeder 1 in Form einer kombinierten Schling-Torsionsfeder zwischen Hohlrad 11 und Planetenträger 6.3 des PWG's 6 angeordnet ist.

Da die Hülse 12 (bzw. deren beiden Hälften 12.1, 12.2) verdrehfest mit den Planetenträger 6.3 verbunden ist, ist diese somit dem Planetenträger 6.3 funktional zuzuordnen Die erste Hälfte 12.1 der Hülse 12 weißt einen Anschlag 12.4 für das erste Ende 1.1 auf, der im eingebauten Zustand zu diesem ersten Ende 1.1 mit einem Winkel α in Schließrichtung der Schlingfeder (erster Bereich A) beabstandet ist.

Die zweite Hülse 12.2 weißt eine Ausnehmung 12.3 auf, in der das zweite Ende 1.2 verdrehfest eingehängt wird.

Das Hohlrad 11 weißt einen zylindrischen Bereich auf, auf dem der erste Bereich A (Schlingfeder) der Schraubenfeder 1 mit einer Vorspannung/Interferenz verbaut wird.

Der zweite Bereich B1 der Feder (Torsionsfederbereich) muss radial nach außen und innen Platz zum Tordieren zu den umgebenden Bauteilen (Hülse 12 und Hohlrad 11) haben um ihrer Funktion zu entsprechen.

Die Wirkungsweise ist folgende:

Wird das PWG 6 gegen eine Last - Kraft F betrieben, wird der Schlingfederbereich = erster Bereich A der Schraubenfeder 1 in Öffnungsrichtung über Reibung aufgrund von Interferenz zwischen Hohlrad 11 und ersten Bereich A betätigt. Das geringe Schleppmoment in Öffnungsrichtung (reibwertunabhängig) beeinflusst dabei den Wirkungsgrad des PWG's 6 nur geringfügig. Wird das PWG 6 durch die Last F getrieben, wird der Schlingfederbereich (erster Bereich A) über Reibung aufgrund von Interferenz (zwischen Hohlrad 11 und ersten Bereich A) mitgenommen (Sperrrichtung) und der zweite Bereich B1 in Form der Torsionsfeder zwischen Hohlrad 11 und Planetenträger 6.3 tordiert bis rücktreibendes Moment (aufgrund der Last) und Torsionfedermoment in Gleichgewicht stehen. Durch zusätzliches Treiben bspw. eines Antriebsmotors wird der zweite Bereich B2 (Torsionsfederbereich) weiter tordiert bis das erst Ende 1.1 den Anschlag 12.4 in der ersten Hälfte 12.1 der Hülse 12 erreicht und das Hohlrad 11 in der Schraubenfeder 1 rutscht. (Motorantriebsmoment > als Torsionsmoment bis Anschlag)

Grundsätzlich kann die Schraubenfeder 1 auch auf dem Hohlrad 11 beingehängt werden, wobei dann auch der Anschlag 12.4 für das erste Ende 1.1 auf dem Hohlrad 11 oder einem damit verdrehfesten Bauteil angebracht sein muss. Der zylindrische Bereich (Reibbereich) ist dann in der Hülse 12 anzuordnen, wie nachfolgend anhand einer weiteren Variante beschrieben wird.

Durch diese Lösung ist ebenfalls eine Selbshemmung eines PWG 6 durch die Verwendung einer Doppelfeder mit zwei unterschiedlichen Federbereichen realisierbar. In der hier beschriebenen Alternative ist die als Doppelschlingfeder ausgebildete Schraubenfeder zwischen Hülse 12 und Hohlrad 11 angeordnet. Eine Rotation der Schraubenfeder 1 wird ausschließlich durch die Rotation des Hohlrades 11 erzeugt. Durch Vorspannungen (Doppelschlingfeder) oder unterschiedliche Wirkprinzipien der Doppelfeder (Schlingfeder und Torsionsfeder) kann eine geringe Reibung in Betätigungsrichtung und eine erhöhte Reibung entgegen dieser Richtung erreicht werden. Diese zweite Reibung kann durch die Rückstellkraft der Kupplung alleine nicht über den ganzen Weg erreicht werden, mittels eines Motors kann diese Kraft überwunden werden, durch einen Vorgesehenen axialen Anschlag für Feder im ersten Hülsenteil kann ab einem bestimmten Drehwinkel dann eine einfacherer Rückstellung mittels des Motors erreicht werden.

Ein PWG 6, ähnlich wie in Figur 20, jedoch in Form einer als Doppelschlingfeder wirkenden Schraubenfeder 1 und mit zweiteiliger Hülse 12 mit gleichem Innendurchmesser, im Längsschnitt zeigt Figur 28 und Figur 29 in dreidimensionaler Ansicht.

Die Schraubenfeder 1 weist einen als Schlingfeder ausgebildeten ersten Bereich A und einen als Schlingfeder ausgebildeten zweiten Bereich B1 auf. Der erste Bereich A steht mit dem Innendurchmesser des ersten Teils 24.1 der Hülse 24 in Wirkverbindung, der zweite Bereich B1 steht mit dem Außendurchmesser des Hohlrades 11 in Wirkverbindung. Die Hülse 12 ist mit den die Planeten 6.2 aufnehmenden Planetenträgern 6.3 drehfest verbundenen. Die Planeten 6.2 kämmen mit der Spindel 2 und das Hohlrad 11 sitzt zwischen den zwei Axiallagern 6.4.

Das Hohlrad 11 mit seinem Außendurchmesser bildet auch hier die Welle = erstes Bauteil und der Innendurchmesser der Hülse 12 die Nabe = zweites Bauteil, zwischen denen die Schraubenfeder 1, die eine Reibeinrichtung bildet, angeordnet ist.

Aus Figur 29 ist eine dreidimensionale Darstellung gem. Figur 28 ersichtlich, aus der die zweiteilige Hülse 12 und die Spindel 2 hervorgehen. Die Bereiche 12.1, 12.2 sind ebenfalls miteinander gehäuseartig verbunden und bilden im Verbindungsbereich einen radial nach außen weisenden Bund 12.5, der von einer Blechklammer 13 umgriffen wird.

Figur 30 zeigt einen Aktor mit einem wirkungsgradoptimierten Spindeltrieb in Form eines PWG 6 gemäß Figur 28/29, der ähnlich wie in Figur 19 aufgebaut ist und eine integrierte Schraubenfeder 1 in Form einer Doppelschlingfeder aufweist. Die als Doppelschlingfeder ausgebildete Schraubenfeder 1 sitzt frei zwischen dem Innendurchmesser der Hülse 12 (= Nabe), die den Federtopf bildet und dem Außendurchmesser des Hohlrades 11 (= Welle) des PWG 6.

Bei dieser in den Figuren 28 bis 30 dargestellten Variante arbeitet der Aktor Kraft- bzw. Moment gesteuert.

Der erste Bereich A der Schlingfeder weißt eine Interferenz zu einem zylindrischen Bereich des Hohlrads 12 auf und ist auf diesem reibschlüssig eingebaut.

Ein zweiter Bereich B2 der Schlingfeder weißt eine Interferenz zu einem zylindrischen Bereich der Hülse (funktional dem Planetenträger zuzuordnen) auf und ist in dieser reibschlüssig eingebaut. Der Vorteil dieser Variante besteht darin, dass eine rotatorische Zuordnung der Doppelschlingfeder zu den umgebenden Bauteilen ist nicht nötig ist.

Das Wirkprinzip, dass die Feder in der Hülse eingesteckt ist und auf einem zylinderförmigen Abschnitt des Holhrades reibmäßig einwirkt kann auch umgekehrt werden.

Mit der erfindungsgemäßen Baugruppe mit Reibeinrichtung ist es möglich, das Getriebe bei Ausfall des Antriebs in seiner Position zu halten bzw. einen Haltestrom zu reduzieren oder zu vermeiden. Vorteilhaft sind dabei der geringe Wirkungsgradeinfluss in die eine Betätigungsrichtung (beispielsweise beim Öffnen einer Kupplung) und die Selbsthemmung in die andere Betätigungsrichtung (beispielsweise beim Schließen einer Kupplung).

Mit dem Getriebe, z.B. dem PWG, welches in einen Aktor integriert ist, wird bevorzugt eine Kupplung durch eine Axialbewegung des PWG betätigt, in dem die Drehbewegung der Spindel in eine Axialbewegung umgewandelt wird. Die Hülse 12 des PWG (die beispielsweise einen radial nach außen weisenden Absatz aufweist, vollführt bei einer Drehbewegung der Spindel eine Axialbewegung gegen die Last der Tellerfederzungen und betätigt diese.

**Bezugszeichenliste**

| | |
|---|---|
| 1 | Schraubenfeder |
| 2 | erstes Ende |
| 2.1 | zweites Ende |
| 3 | Federtopf |
| 3.1 | Stirnseite |
| 3.1' | endseitige Stirnseite |
| 3.2 | Ausnehmung |
| 3.3 | Flansch |
| 3.4 | buchsenartiger Bereich |
| 3.5 | Anschläge |
| 3d | Innendurchmesser |
| 4 | Spindel |
| 5 | Gehäuse |
| 6 | PWG |
| 6.1 | PWG-Gehäuse |
| 6.2 | Planeten |
| 6.3 | Planetenträgerem |
| 6.4 | Axiallager |
| 7 | Elektromotor |
| 7.1 | Stator |
| 7.2 | Rotor |
| 8 | Welle |
| 9 | Nabe |
| 10 | Käfig |
| 11 | Hohlrad |
| 12 | Hülse |
| 12.1 | erster Bereich der Hülse |
| 12.2 | zweiter Bereich der Hülse |
| 12.3 | Ausnehmung |
| 12.4 | Anschlag |
| 12.5 | Bund |
| A | erster Bereich |
| B | zweiter Bereich |
| C | Übergangsbereich |
| b | Breite der Windungen im ersten Bereich A |
| h | Höhe der Windungen im ersten Bereich A |
| b* | Breite der Windungen im zweiten Bereich B1 |
| h* | Höhe der Windungen im zweiten Bereich B2 |
| D8 | Außendurchmesser der Welle 8 |
| d9 | Innendurchmesser der Nabe 9 |

**Patentansprüche**

1. Baugruppe mit einer Reibeinrichtung mit wenigstens zwei relativ zueinander drehbaren Bauteilen, insbesondere für die Betätigung einer Kupplung eines Fahrzeuges, wobei zwischen den relativ zueinander drehbaren Bauteilen eine bei einer Relativdrehung der Bauteile den Wirkungsgrad/die Reibung beeinflussende Schraubenfeder (1) angeordnet ist, wobei die Baugruppe wenigstens Bestandteil eines Getriebes und/oder Aktors ist,
   die Schraubenfeder (1), die zumindest bereichsweise eine Schlingfeder bildet, eine einfache Schlingfeder oder eine Doppelschlingfeder oder eine Schling-Torsionsfeder ist,
   die Schlingfeder oder die doppelte Schlingfeder oder die Schling-Torsionsfeder zwischen einem rotativen Element eines PWG (6) oder eines anderen Getriebes und einem gehäusefesten Teil des Aktors oder zwischen zwei relativ zueinander mit unterschiedlichen Drehzahlen drehbaren Elementen des PWG (6) oder eines anderen Getriebes angeordnet ist,
   die Schlingfeder oder die doppelte Schlingfeder oder die Schling-Torsionsfeder

   - zwischen einer durch den Antrieb rotatorisch antreibbaren Spindel (2) des PWGs (6) = erstes Bauteil und einem gestellfest/gehäusefest angeordneten Bauteil / Federtopf (3) = zweites Bauteil angeordnet ist
   oder
   - zwischen einer durch den Antrieb rotatorisch antreibbaren Spindel (2) des PWGs (6) = erstes Bauteil und einem drehfest/gestellfest an einem Gehäuse des PWG befestigtem Federtopf (3) = zweites Bauteil angeordnet ist

   oder in das PWG (6) zwischen zwei relativ zueinander drehbaren Bauteilen des PWG (6) integriert ist **dadurch gekennzeichnet, dass**
   die Schlingfeder oder die doppelte Schlingfeder oder die Schling-Torsionsfeder zwischen einem Außendurchmesser eines mit den Planeten des PWG (6) kämmenden Hohlrades (11) = erstes Bauteil und einem Innendurchmesser einer das PWG (6) im Bereich des Hohlrades (11) ummantelnden Hülse(12) = zweites Bauteil angeordnet ist..

2. Baugruppe mit einer Reibeinrichtung nach Anspruch 1, **dadurch gekennzeichnet, dass** die Schraubenfeder (1) mit einem ersten Bauteil und mit einem zum ersten Bauteil

   - drehbar
   oder
   - drehbar und axial verschiebbar

   angeordneten zweiten Bauteil wirkverbunden ist.

3. Baugruppe mit einer Reibeinrichtung nach einem der Ansprüche 1 und 2, **dadurch gekennzeichnet, dass** das erste Bauteil radial innerhalb des zweiten Bauteiles angeordnet und ggf. axial versetzt ist und die

   - Schlingfeder oder
   - Doppelschlingfeder oder
   - Schling-Torsionsfeder

   zwischen dem ersten und dem zweiten Bauteil sitzt und mit einem ersten Ende (1.1) drehfest oder reibschlüssig mit dem ersten Bauteil und mit einem zweiten Ende (1.2) reibschlüssig mit dem zweiten Bauteil verbunden ist.

4. Baugruppe mit einer Reibeinrichtung nach einem der Ansprüche 1 bis 3, **dadurch gekennzeichnet, dass** die Schraubenfeder (1) folgende Merkmale aufweist:

   - einen als Schlingfeder (Eytelwein-Formel) wirkenden ersten Bereich (A) mit dem ersten Ende (1.1), wobei in dem ersten Bereich (A) eine Reibung oder eine konstante oder variable Vorspannung zur Erzielung einer Reibung erzeugbar ist,
   - einen als Torsionsfeder wirkenden zweiten Bereich (B1) mit dem zweiten Ende (1.2),
   - einen Übergangsbereich (C), der den ersten Bereich (A) und den zweiten Bereich (B1) mit einander verbindet.

5. Baugruppe mit einer Reibeinrichtung nach einem der Ansprüche 1 bis 3, **dadurch gekennzeichnet, dass** die als Doppelschlingfeder ausgebildete Schraubenfeder (1) folgende Merkmale aufweist:

   - einen als Schlingfeder (Eytelwein-Formel) wirkenden ersten Bereich (A) mit einem stumpfen ersten Ende (1.2), wobei in dem ersten Bereich (A) eine Reibung oder eine Vorspannung/Interferenz (a1) zu dem zweiten Bauteil in Form einer Nabe (9)/Hohlwelle/Bohrung zur Erzielung einer Reibung erzeugbar ist,
   - einen als Schlingfeder wirkenden zweiten Bereich (B2) mit einem stumpfen zweiten Ende (1.2), mit Vorspannung/Interferenz (a2) zu dem ersten Bauteil in Form einer Welle (8)
   - einen Übergangsbereich (C), der den ersten Bereiche (A) und den zweiten Bereich (B2) mit einander verbindet.

6. Baugruppe mit einer Reibeinrichtung nach einem der Ansprüche 1 bis 5, **dadurch gekennzeichnet, dass** diese in ein durch einen Antrieb betätigbares Planetenwälzgetriebe/PWG (6) oder ein Getriebe anderer Bauart integriert ist derart, dass eine drehrichtungsabhängige Reibung durch das zwischen dem ersten Bauteil und dem zweiten Bauteil bei treibendem Aktor gegen eine Last geringfügig bzw. bei treibender Last deutlich erhöht wird um ein nicht selbsthemmendes PWG (6) /Getriebe im Fehlerfall/Ausfall des Antriebs zu halten oder um einen Haltestrom zu reduzieren oder zu vermeiden.

**Claims**

1. Assembly having a friction device with at least two components which can be rotated relative to one another, in particular for the actuation of a clutch of a vehicle, a helical spring (1) which influences the degree of efficiency/the friction in the case of a relative rotation of the components being arranged between the components which can be rotated relative to one another, the assembly being at least a constituent part of a gear mechanism and/or actuator, the helical spring (1) which forms a wrap spring at least in regions being a single wrap spring or a double wrap spring or a torsion wrap spring, the wrap spring or the double wrap spring or the torsion wrap spring being arranged between a rotational element of a planetary roller spindle drive (6) or another gear mechanism and a part of the actuator which is fixed to the housing or between two elements of the planetary roller spindle drive (6) or of another gear mechanism which can be rotated relative to one another at different rotational speeds, the wrap spring or the double wrap spring or the torsion wrap spring

    - being arranged between a spindle (2) of the planetary roller spindle drive (6) (= first component), which spindle (2) can be driven rotationally by way of the drive, and a component/spring part (3) (= second component) which is arranged such that it is fixed to the frame/housing, or
    - being arranged between the spindle (2) of the planetary roller spindle drive (6) (= first component), which spindle (2) can be driven rotationally by way of the drive, and a spring part (3) (= second component) which is fastened to a housing of the planetary roller spindle drive such that it cannot rotate/is fixed to the frame,

or being integrated into the planetary roller spindle drive (6) between two components of the planetary roller spindle drive (6) which can be rotated relative to one another, **characterized in that** the wrap spring or the double wrap spring or the torsion wrap spring is arranged between an external diameter of an internal gear (11) (= first component) which meshes with the planets of the planetary roller spindle drive (6) and an internal diameter of a sleeve (12) (= second component) which encases the planetary roller spindle drive (6) in the region of the internal gear (11).

2. Assembly having a friction device according to Claim 1, **characterized in that** the helical spring (1) is operatively connected to a first component and to a second component which is arranged

    - rotatably
    or
    - rotatably and axially displaceably

with respect to the first component.

3. Assembly having a friction device according to either of Claims 1 and 2, **characterized in that** the first component is arranged radially within the second component and is optionally offset axially, and the

    - wrap spring or
    - double wrap spring or
    - torsion wrap spring

is seated between the first and the second component and is connected with a first end (1.1) to the first component fixedly so as to rotate with it or in a frictionally locking manner, and is connected with a second end (1.2) to the second component in a frictionally locking manner.

4. Assembly having a friction device according to one of Claims 1 to 3, **characterized in that** the helical spring (1) has the following features:

    - a first region (A) with the first end (1.1), which first region (A) acts as a wrap spring (Eytelwein formula), it being possible for a friction or a constant variable prestress in order to achieve a friction to be produced in the first region (A),
    - a second region (B1) with the second end (1.2), which second region (B1) acts as a torsion spring,
    - a transition region (C) which connects the first region (A) and the second region (B1) to one another.

5. Assembly having a friction device according to one of Claims 1 to 3, **characterized in that** the helical spring (1) which is configured as a double wrap spring has the following features:

    - a first region (A) with a blunt first end (1.2), which first region (A) acts as a wrap spring (Eytelwein formula), it being possible for a friction or prestress/interference (a1) with respect to the second component in the form of a hub (9)/hollow shaft/bore in order to achieve a friction to be produced in the first region (A),
- a second region (B2) with a blunt second end (1.2), which second region (B2) acts as a wrap spring, with prestress/interference (a2) with respect to the first component in the form of a shaft (8),
- a transition region (C) which connects the first region (A) and the second region (B2) to one another.

6. Assembly having a friction device according to one of Claims 1 to 5, **characterized in that** it is integrated into a planetary rolling-contact gear mechanism/planetary roller spindle drive (6) which can be actuated by way of a drive, or into a gear mechanism of another design, in such a way that a friction which is dependent on the rotational direction by way of the between the first component and the second component is increased slightly in the case of a driving actuator counter to a load or is increased considerably in the case of a driving load, in order to hold a non-self-locking planetary roller spindle drive (6)/gear mechanism in the case of a fault/failure of the drive, or in order to reduce or to avoid a holding current.

**Revendications**

1. Ensemble comprenant un système de frottement avec au moins deux pièces pouvant tourner l'une par rapport à l'autre, en particulier pour l'actionnement d'un embrayage d'un véhicule, dans lequel un ressort hélicoïdal (1) influençant le rendement/le frottement lors d'une rotation relative des pièces est disposé entre les pièces pouvant tourner l'une par rapport à l'autre, dans lequel l'ensemble est au moins un composant d'une transmission et/ou d'un actionneur,
le ressort hélicoïdal (1), qui forme au moins localement un ressort enroulé, est un ressort enroulé simple ou un ressort enroulé double ou un ressort de torsion enroulé,
le ressort enroulé ou le ressort enroulé double ou le ressort de torsion enroulé est disposé entre un élément rotatif d'une PWG [transmission par vis à rouleaux planétaires] (6) ou d'une autre transmission et une partie de l'actionneur fixe par rapport au carter ou entre deux éléments de la PWG (6) ou d'une autre transmission pouvant tourner l'un par rapport à l'autre avec des vitesses différentes,
le ressort enroulé ou le ressort enroulé double ou le ressort de torsion enroulé

   - est disposé entre une broche (2) de la PWG (6) pouvant être entraînée en rotation par l'entraînement = première pièce et une pièce/cuvette de ressort (3) fixe par rapport au châssis/carter = deuxième pièce
ou
   - est disposé entre une broche (2) de la PWG (6) pouvant être entraînée en rotation par l'entraînement = première pièce et une cuvette de ressort (3) fixe en rotation/par rapport au châssis fixée à un carter de la PWG = deuxième pièce,
ou
   - est intégré dans la PWG (6) entre deux pièces de la PWG (6) pouvant tourner l'une par rapport à l'autre,

   **caractérisé en ce que** le ressort enroulé ou le ressort enroulé double ou le ressort de torsion enroulé est disposé entre un diamètre extérieur d'une couronne dentée (11) engrenant avec les satellites de la PWG (6) = première pièce et un diamètre intérieur d'un manchon (12) entourant la PWG (6) dans la région de la couronne dentée (11) = deuxième pièce.

2. Ensemble comprenant un système de frottement selon la revendication 1, **caractérisé en ce que** le ressort hélicoïdal (1) est en liaison active avec une première pièce et avec une deuxième pièce disposée

   - de façon rotative
ou
   - de façon rotative et déplaçable axialement

   par rapport à la première pièce.

3. Ensemble comprenant un système de frottement selon une des revendications 1 et 2, **caractérisé en ce que** la première pièce est disposée radialement à l'intérieur de la deuxième pièce et est éventuellement décalée axialement et

   - le ressort enroulé ou
   - le ressort enroulé double ou
   - le ressort de torsion enroulé

   se trouve entre la première et la deuxième pièces et est relié par une première extrémité (1.1) sans rotation ou par frottement à la première pièce et par une deuxième extrémité (1.2) par frottement à la deuxième pièce.

4. Ensemble comprenant un système de frottement selon l'une quelconque des revendications 1 à 3, **caractérisé en ce que** le ressort hélicoïdal (1) présente les caractéristiques suivantes:

   - une première région (A) agissant comme ressort enroulé (formule d'Eytelwein) avec la première extrémité (1.1), dans lequel un frottement ou une précontrainte constante ou variable peut être produit(e) dans la première région (A) pour obtenir un frottement,

- une deuxième région (B1) agissant comme ressort de torsion avec la deuxième extrémité (1.2),

- une région de transition (C), qui relie l'une à l'autre la première région (A) et la deuxième région (B1).

5. Ensemble comprenant un système de frottement selon l'une quelconque des revendications 1 à 3, **caractérisé en ce que** le ressort hélicoïdal (1) réalisé en ressort enroulé double présente les caractéristiques suivantes :

- une première région (A) agissant comme ressort enroulé (formule d'Eytelwein) avec une première extrémité émoussée (1.2), dans lequel un frottement ou une précontrainte/interférence (a1) par rapport à la deuxième pièce peut être produite dans la première région (A) sous la forme d'un moyeu (9)/arbre creux/alésage pour obtenir un frottement,

- une deuxième région (B2) agissant comme ressort enroulé avec une deuxième extrémité émoussée (1.2), avec une précontrainte/interférence (a2) par rapport à la première pièce sous la forme d'un arbre (8),

- une région de transition (C), qui relie l'une à l'autre la première région (A) et la deuxième région (B2).

6. Ensemble comprenant un système de frottement selon l'une quelconque des revendications 1 à 5, **caractérisé en ce qu'**il est intégré dans une transmission par vis à rouleaux planétaires/PWG (6) actionnable par un entraînement ou dans une transmission d'un autre type, de telle manière qu'un frottement dépendant du sens de rotation soit, au moyen de entre la première pièce et la deuxième pièce, légèrement accru lorsque l'actionneur entraîne contre une charge ou nettement accru lorsque la charge entraîne, afin de garder une PWG (6)/transmission non autobloquante en cas de défaut/panne de l'entraînement ou afin de réduire ou d'éviter un courant de maintien.

**Fig. 2**

**Fig. 1**

Fig. 4

Fig. 3

Fig. 6

Fig. 5

Fig. 8

Fig. 7

Fig. 9

Fig. 10

Fig. 11

Fig. 12

EP 3 052 826 B1

Fig. 13

Fig. 14

Fig. 15

Fig. 16

EP 3 052 826 B1

Fig. 17

Doppel-Schlingfeder
(frei)

Doppel-Schlingfeder
(eingebaut)

Fig. 18

Doppel-Schlingfeder
(frei)

Doppel-Schlingfeder
(eingebaut)

Fig. 19

12.1  12  A  1  C  B  1.2  12.2  6.5

6.2

12.1

2

6.3

6.4  11

6

**Fig. 20**

Fig. 21

Fig. 22

Fig. 23

Fig. 26

Fig. 27

Fig. 24

Fig. 25

**Fig. 28**

**Fig. 29**

**Fig. 30**

**IN DER BESCHREIBUNG AUFGEFÜHRTE DOKUMENTE**

**In der Beschreibung aufgeführte Patentdokumente**

- EP 0724934 A
- US 2510653 A
- US 5287949 A
- WO 2011015497 A
- EP 2280182 A
- WO 2013112048 A
- DE 102012209883 A1
- EP 320621 A1
- DE 102010047800 A1
- DE 102007047394 A1